**Europäisches Patentamt**

**European Patent Office**

**Office européen des brevets**

(19)

(11) Veröffentlichungsnummer: **0 208 866**
**B1**

(12) **EUROPÄISCHE PATENTSCHRIFT**

(45) Veröffentlichungstag der Patentschrift: **04.07.90**

(21) Anmeldenummer: **86106532.4**

(22) Anmeldetag: **14.05.86**

(51) Int. Cl.⁵: **G 01 N 21/35**, G 01 N 21/61

(54) **Gasanalysator mit grossflächigem pyroelektrischem Detektor.**

(30) Priorität: **13.07.85 DE 3525148**

(43) Veröffentlichungstag der Anmeldung:
**21.01.87 Patentblatt 87/04**

(45) Bekanntmachung des Hinweises auf die
Patenterteilung:
**04.07.90 Patentblatt 90/27**

(84) Benannte Vertragsstaaten:
**DE FR GB NL SE**

(56) Entgegenhaltungen:
**EP-A- 168 611
DD-A- 207 766
GB-A-2 076 173
US-A-4 355 233
US-A-4 367 408**

**APPLIED OPTICS, Band 13, Nr. 10, Oktober 1974,
Seiten 2212-2217, New York, US; W.R. BLEVIN
et al.: "Infrared reflectometry with a cavityshaped pyroelectric detector"**

(73) Patentinhaber: **Hartmann & Braun
Aktiengesellschaft
Gräfstrasse 97
D-6000 Frankfurt am Main 90 (DE)**

(72) Erfinder: **Fabinski, Walter
An der Landwehr 70
D-6239 Kriftel (DE)**
Erfinder: **Nevole, Josef
Breitlacher Strasse 52
D-6000 Frankfurt/M (DE)**

EP 0 208 866 B1

## Beschreibung

In EP—A—168611 (Prioritäten: 18.7 und 20.12.84; Veröffentlichung 22.1.86) ist ein Infrarot-Gasanalysator beschrieben mit zwei auf beiden Seiten mit einer Metallschicht versehenen großflächigen Folien (z.B. aus Polyvinylidenfluorid, Polyvinylfluorid oder -chorid), die bei Auftreffen von Infrarot-Strahlung einen pyroelektrischen Effekt und bei Erschütterung einen piezoelektrischen Effekt zeigen, wobei die der Infrarot-Strahlung zugewandte und von ihr beaufschlagbare Seite der einen Folie geschwärzt ist und daher einen pyroelektrischen und bei Erschütterung einen piezoelektrischen Effekt zeigt, und wobei die andere Folie von der Infrarot-Strahlung nicht beaufschlagbar ist und daher nur bei Erschütterung einen piezoelektrischen Effekt zeigt, und mit einer elektrischen Verschaltung der beiden Folien zur Kompensation des durch die Erschütterung hervorgerufenen piezoelektrischen Effektes. Normalerweise wird bei Empfängern dieser Art der pyroelektrische Effekt dahingehend ausgenutzt, daß die auf die Folie auftreffenden Infrarotstrahlen in ein elektrisches Signal umgewandelt werden, das ein Maß für die Absorption in der Meßküvette und somit ein Maß für die Konzentration der Meßkomponente ist.

Pyroelektrische Schichten zum Nachweis von Infrarotstrahlung sind bekannt, vgl. z.B. US—A—4 367 408. Metallbeschichtete Polyvinyliden=fluorid- und Polyvinylfluorid-Folien für denselben zweck sind aus Appl. Opt., 13 (1974) 10, S. 2212—2217 bekannt.

Bei Einsatz einer solchen Folie aus Polyvinylidenfluorid oder aus Polyvinylfluorid oder aus Polyvinylchlorid entsteht jedoch außer dem pyroelektrischen Effekt infolge Erschütterungen oder infolge Schalles ein das Meßergebnis verfälschender piezoelektrischer Effekt.

Die Erfindung betrifft einen Gasanalysator mit einem Detektor in Form einer großflächigen Folie, die beim Auftreffen von Infrarotstrahlen einen pyroelektrischen Effekt auslöst nach Maßgabe der Konzentration des zu analysierenden Gases, bei dem dieser Nachteil nicht auftritt. Die Erfindung besteht in den Merkmalen des Anspruches 1.

Einfach gestalten sich die Verhältnisse, wenn die der Strahlung abgewandte Seite der Folie metallisiert ist, die als gemeinsame Elektrode für die Abnahme der durch die zwei Folienteile (geschwärzte und ungeschwärzte) ausgelösten zur Signalbildung erforderlichen Effekte dient. Die piezoelektrischen Anteile werden nach elektrischer Aufbereitung in einer elektronischen Antiparallelschaltung gegeneinander geschaltet und so eliminiert.

Die Erfindung wird anhand der Zeichnung näher erläutert. In der Zeichnung stellt

Figur 1 den Gesamtaufbau des erfindungsgemäß ausgebildeten Analysators dar,

Figur 2 eine bevorzugte Ausbildung des Empfängers und

Figur 3 eine weitere Ausbildung des Empfängers.

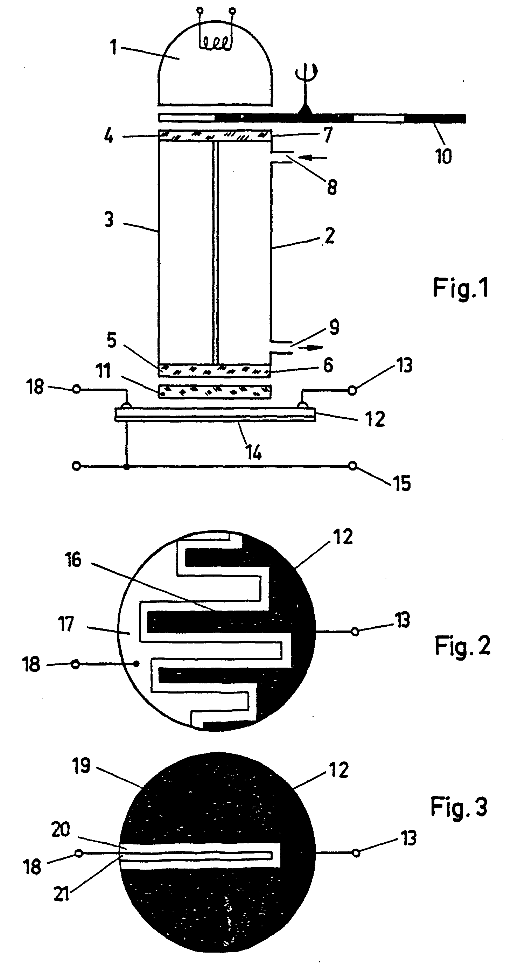

In dem Analysator nach Fig. 1 werden Infrarotstrahlen in dem Strahler 1 erzeugt, die die Meßküvette 2 und die Vergleichsküvette 3 durchlaufen, die mit den für Infrarotstrahlen durchlässigen Fenstern 4, 5, 6 und 7 ausgestattet sind. Das Meßgas wird durch den Einlaßstutzen 8 zugeführt und durch den Stutzen 9 abgeführt. Die die Maßküvette 2 und die Vergleichsküvette 3 durchlaufenden Strahlen werden durch die Blende 10 gegenphasig moduliert. Die die Küvetten 2 und 3 verlassenden Strahlen laufen durch das Interferenzfilter 11 auf den als Folie 12 ausgebildeten Detektor, die insbesondere aus Polyvinylidenfluorid besteht. An der Folie entsteht ein pyroelektrischer Effekt nach Maßgabe der Konzentration der die Meßküvette 2 durchlaufenden Meßgaskomponente. Zur Abnahme dieses pyroelektrischen Effektes ist die Klemme 13 mit einer z.B. im Aufdampfverfahren aufgebrachte Metallschicht verbunden; die Gegenelektrode wird durch die auf die Folie 12 auf der der Strahlung abgewandten Seite aufgebrachte dünne Metallschicht 14 bebildet. Das elektrische Signal, das dem pyroelektrischen Effekt entspricht, entsteht an den Klemmen 15/18.

Infolge Erschütterung oder infolge Schalles kann in der Folie 12 auch ein piezoelektrischer Effekt ausgelöst werden, der sich dem an den Klemmen 13 und 15 entstehenden Signal infolge des pyroelektrischen Effektes überlagert und das Meßergebnis fälscht.

Um diese Störung zu vermeiden, ist die der Strahlung zugewandte Seite der Folie 12 zum Teil geschwärzt, wie die Fig. 2 und Fig. 3 erkennen lassen.

In Fig. 2 ist die der Strahlung zugewandte Seite der Folie 12 mäanderförmig aufgeteilt. Diese Teile greifen fingerartig ineinander und zwar über den ganzen Querschnitt. Der Teil 16 ist geschwärzt. Der Teil 17 ist blank und mit Metall, vorzugsweise mit Gold überzogen. Auf diese Weise wird eine Reflexion der einfallenden Infrarotstrahlen gewährleistet. Die Teile 16 und 17 sind elektrisch voneinander isoliert.

An den nicht geschwärzten Teilen der Folie 12 entsteht praktisch kein pyroelektrischer Effekt, jedoch bei Erschütterung ein piezoelektrischer Effekt. Das Signal als Folge dieses piezoelektrischen Effektes wird an den Klemmen 15 und 18 abgenommen.

Der an den Klemmen 15/18 abgenommene piezoelektrische Effekt und der an den Klemmen 13/15 sich dem pyroelektrischen Effekt überlagernde piezoelektrische Effekt werden einer elektronischen Antiparallelschaltung zugeführt, in der sie sich gegenseitig kompensieren.

In der nach Fig. 3 erfindungsgemäß ausgebildeten Folie 12 überdeckt der geschwärzte Teil 19 nahezu die gesamte den Strahlen zugewandte Fläche der Folie 12; nur eine schmale Ausnehmung 20 ist ungeschwärzt und weist, isoliert von dem geschwärzten Teil 19, eine schmale Zunge 21 auf, die metallisiert ist; vorzugsweise wird als Überzugsmaterial Gold verwendet, das im Aufdampfungsverfahren aufgebracht ist. Die metallisierte Zunge 21 ist mit der Klemme 18 verbunden.

## Patentansprüche

1. Infrarot-Gasanalysator mit einem Detektor in Form einer beidseitig mit einer Metallschicht versehenen, großflächigen Folie (12), die beim Auftreffen von Infrarotstrahlen eine pyroelektrischen Effekt auslöst nach Maßgabe der Konzentration des zu analysierenden Gases, bei dem die der Infrarot-Strahlung zugewandte Seite der Folie (12) einen geschwärzten ersten Teil (16, 19) aufweist, der beim Auftreffen der Infrarotstrahlen einen pyroelektrischen Effekt erzeugt und bei Erschütterung auch einen piezoelektrischen Effekt auslöst, sowie einen vom ersten Teil (16, 19) elektrisch isolierten, nicht geschwärzten zweiten Teil (17, 21), der die Infrarotstrahlen reflektiert und keinen pyroelektrischen Effekt auslöst, sondern nur einen piezoelektrischen Effekt bei Erschütterung, und bei dem eine elektrische Schaltung vorgesehen ist, in der die von den zwei Folienteilen ausgelösten piezoelektrischen Effekte kompensiert werden.

2. Gasanalysator nach Anspruch 1, dadurch gekennzeichnet, daß die der Strahlung abgewandte Seite (14) der Folie metallisiert ist und die gemeinsame Elektrode (15) für die Abnahme der durch beide Folienteile ausgelösten, zur Signalbildung erforderlichen Effekte bildet.

3. Gasanalysator nach Anspruch 1 oder 2, dadurch gekennzeichnet, daß der geschwärzte erste Teil (16) und der blanke zweite Teil (17) isoliert voneinander über die gesamte Fläche der Folie (12) verteilt mäanderförmig ineinander greifen.

4. Gasanalysator nach Anspruch 1 oder 2, dadurch gekennzeichnet, daß die gesamte der Strahlung zugewandte Seite der Folie (12) geschwärzt ist mit Ausnahme einer schmalen Ausnehmung (20) in der Mitte der Fläche, in der isoliert von dem geschwärzten ersten Teil (19) eine metallisierte Zunge (21) vorgesehen ist.

5. Gasanalysator nach Anspruch 1 oder folgenden, dadurch gekennzeichnet, daß der nicht geschwärzte zweite Teil (17, 20) der Folie (12) mit Gold überzogen ist.

6. Gasanalysator nach Anspruch 1 oder folgenden, dadurch gekennzeichnet, daß die piezoelektrischen Effekte nach elektrischer Aufbereitung in einer elektronischen Antiparallelschaltung kompensiert werden.

## Revendications

1. Analyseur de gaz à infrarouge avec un détecteur revêtant la forme d'un film de grande surface (12) muni sur ses deux faces, d'une couche métallique, ce film déclenchant lors de l'incidence de rayons infrarouges, un effet pyroélectrique selon la concentration du gaz à analyser, analyseur dans lequel la face exposée au rayonnement infrarouge du film (12) comporte une première partie (16, 19) noircie qui, lors de l'incidence des rayons infrarouges produit un effet pyroélectrique et qui, lors de secousses, produit également un effet piézo-électrique, ainsi qu'une seconde partie (17, 21) non noircie, isolée électriquement de la partie (16, 19), et qui réfléchit les rayons infrarouges sans déclencher d'effet pyroélectrique, mais seulement un effet piézo-électrique en cas de secousses, tandis qu'il est prévu un circuit électrique dans lequel les effets piézo-électriques déclenchés par les deux parties du film, sont compensés.

2. Analyseur de gaz selon la revendication 1, caractérisé en ce que la face (14), opposée au rayonnement du film, est métallisée et constitue l'électrode commune (15) pour la transmission des effets nécessaires pour la formation du signal et déclenchés par les deux parties de film.

3. Analyseur de gaz selon la revendication 1 ou la revendication 2, caractérisé en ce que la première partie noircie (16) et la seconde partie blanche (17) isolées l'une de l'autre sur la totalité de la surface du film (12), viennent en prise l'une dans l'autre en étant réparties en forme de méandres.

4. Analyseur de gaz selon la revendication 1 ou la revendication 2, caractérisé en ce que la totalité de la face exposée au rayonnement du film (12) est noircie à l'exception d'une partie étroite (20) dans le milieu de la surface, dans laquelle est prévue une languette métallisée (21) isolée de la première partie noircie (19).

5. Analyseur de gaz selon la revendication 1 ou les suivantes, caractérisé en ce que la deuxième partie non noircie (17, 20) du film (12) est revêtue avec de l'or.

6. Analyseur de gaz selon la revendication 1 ou les suivantes, caractérisé en ce que les effets piézo-électriques, après préparation électrique, sont compensés dans un circuit électronique antiparallèle.

## Claims

1. Infrared gas analyser with a detector in the form of a large-area sheet (12) provided on both sides with a metal coating, which on the impingement of infrared rays triggers a pyroelectric effect according to the concentration of the gas to be analysed, in which the side of the sheet (12) facing the infrared radiation comprises a blackened first part (16, 19) which on the impingement of the infrared rays generates a pyroelectric effect and on vibration also triggers a piezoelectric effect, together with a non-blackened second part (17, 21) insulated electrically from the first part (16, 19) which reflects the infrared rays and does not trigger a pyroelectric effect but only a piezoelectric effect when vibrated, and in which an electric circuit is provided in which the piezoelectric effects triggered by the two parts of the sheet are compensated.

2. Gas analyser according to claim 1, characterized in that the side (14) of the sheet turned away from the radiation is metallized and forms the common electrode for the collection of the effects triggered by the two sheet parts and required for the signal formation.

3. Gas analyser according to claim 1 or 2, characterized in that the blackened first part (16) and the blank second part (17) are mutually insulated, distributed over the whole area of the sheet (12) and engage with each other in a meander shape.

4. Gas analyser according to claim 1 or 2, characterised in that the whole of the side of the sheet (12) facing the radiation is blackened with the exception of a narrow recess (20) in the centre of the area, in which a metallized tongue (21) insulated from the blackened first part (19) is provided.

5. Gas analyser according to claim 1 or following claims characterised in that the non-blackened second part (17, 20) of the sheet (12) is coated with gold.

6. Gas analyser according to claim 1 or following claims, characterised in that the piezoelectric effects are after electric processing compensated in an electronic back-to-back circuit.

Fig.1

Fig.2

Fig.3